# Europäisches Patentamt

## European Patent Office

## Office européen des brevets

(19)

(11) Publication number: **0 034 450**
**B1**

---

(12) **EUROPEAN PATENT SPECIFICATION**

(45) Date of publication of patent specification: **05.10.83**

(51) Int. Cl.³: **B 60 T 8/087**

(21) Application number: **81300518.8**

(22) Date of filing: **09.02.81**

---

(54) Improvements in hydraulic anti-skid braking systems for vehicles.

---

(30) Priority: **16.02.80 GB 8005305**

(43) Date of publication of application:
**26.08.81 Bulletin 81/34**

(45) Publication of the grant of the patent:
**05.10.83 Bulletin 83/40**

(84) Designated Contracting States:
**DE FR IT**

(56) References cited:
**GB - A - 937 062**
**GB - A - 1 227 950**
**GB - A - 1 493 674**
**GB - A - 2 029 914**
**US - A - 4 167 896**

(73) Proprietor: **LUCAS INDUSTRIES public limited company**
**Great King Street**
**Birmingham, B19 2XF (GB)**

(72) Inventor: **Farr, Glyn Phillip Reginald**
**21 The Hamlet**
**Leek Wootton Warwickshire (GB)**

(74) Representative: **Spall, Christopher John et al,**
**BARKER, BRETTELL & DUNCAN 138 Hagley Road**
**Edgbaston Birmingham B16 9PW (GB)**

---

Courier Press, Leamington Spa, England.

Improvements in hydraulic anti-skid braking systems for vehicles

This invention relates to hydraulic anti-skid braking systems for vehicles of the kind in which a supply of operating fluid from a supply to a vehicle brake is modulated by a modulator assembly in accordance with skid signals from skid sensing means, and an hydraulic pump incorporating a plunger working in a bore has a working chamber which is in communication with means adapted to control brake re-application following skid correction.

An anti-skid braking system of the kind set forth is disclosed in our G.B.—A—2029914 (published 26.03.80). In that system the pump is operable only to re-pressurise an expansion chamber following correction of a skid. This is achieved by the provision of disabler means for preventing the plunger of the pump from engaging with a drive until a dump valve, disposed between the expansion chamber of a modulator assembly for modulating the supply of operating fluid to the brake and a reservoir for fluid, has opened. Specifically the pump plunger is of differential outline adapted to work in a stepped bore with the end of greater area exposed to the operating fluid and the end of smaller area being engagable with the drive, and the disabler means comprise a spring for urging the smaller end of the plunger away from the drive in combination with the pressure in the working chamber which is generated by the operating pressure and which acts over an area of the plunger equal to the difference between opposite ends of the plunger. In such a construction elastomeric seals are provided between the two portions of the plunger and the complementary portions of the bore. Also a separate one-way valve is provided, through which fluid is drawn into the working chamber from the reservoir for fluid. However the elastomeric seals can be prone to excessive wear and the provision of a separate one-way valve adds to the cost of the pump.

According to our invention in an hydraulic anti-skid braking system of the kind set forth the pump plunger works in the bore of a sleeve which is axially movable in a bore in a housing between an operative position and an inoperative position, when the sleeve is in the operative position the plunger can co-operate with a drive mechanism so that the plunger is reciprocated in the bore to draw fluid from a reservoir and into the working chamber through an inlet port during an induction stroke and during a compression stroke to force it through an outlet port to the modulator assembly, and when the sleeve is in the inoperative position the plunger is prevented from co-operating with the drive mechanism so that the pump is disabled.

The sleeve is provided with opposed first and second faces of which the first face is exposed to the pressure of fluid in an expansion chamber, at least when the dump valve is closed, and the second face is exposed to the pressure from the supply, so that the sleeve is held in the inoperative position, when a dump valve is closed, by the incompressibility of the fluid in the expansion chamber, reduction in the pressure applied to the first face permitting the sleeve to move into the operative position in which the plunger can co-operate with the drive mechanism.

When the pump is disabled the plunger is prevented from co-operating with the drive mechanism by the engagement of a shoulder on the sleeve with a complementary shoulder on the plunger.

Preferably a spring also acts to urge the sleeve towards the inoperative position, and a second spring acts to urge the plunger towards the drive mechanism with respect to the sleeve.

Preferably the first and second faces of the sleeve are of smaller and greater areas respectively.

Preferably the plunger is hollow and incorporates at least one radial port through which the reservoir can communicate with the working chamber when the sleeve is in the inoperative position, and during the induction stroke when the pump is operating, the port being closed by the sleeve during the compression stroke. This eliminates the separate one-way inlet valve of the previous design and also allows the elastomeric seals to be eliminated since any leakage between the plunger and the sleeve returns to the reservoir.

Our invention is particularly suitable for use in anti-skid braking systems in which the modulator assembly incorporates the expansion chamber to which the working chamber of the pump is connected, and the dump valve is disposed between the expansion chamber and the reservoir for fluid, the dump valve being movable by the skid sensing means between a normally closed position in which the expansion chamber is pressurised so that the modulator assembly is held in a first position permitting operating fluid to be supplied to the brake and an open position when the skid signal is received whereby the pressure in the expansion chamber is reduced so that the modulator assembly can move into a second position to cut-off communication between the supply and the brake and subsequently reduce the pressure of fluid supplied to the brake. In such a construction the outlet port is connected to the expansion chamber.

One embodiment of our invention is illustrated in the accompanying drawings in which:

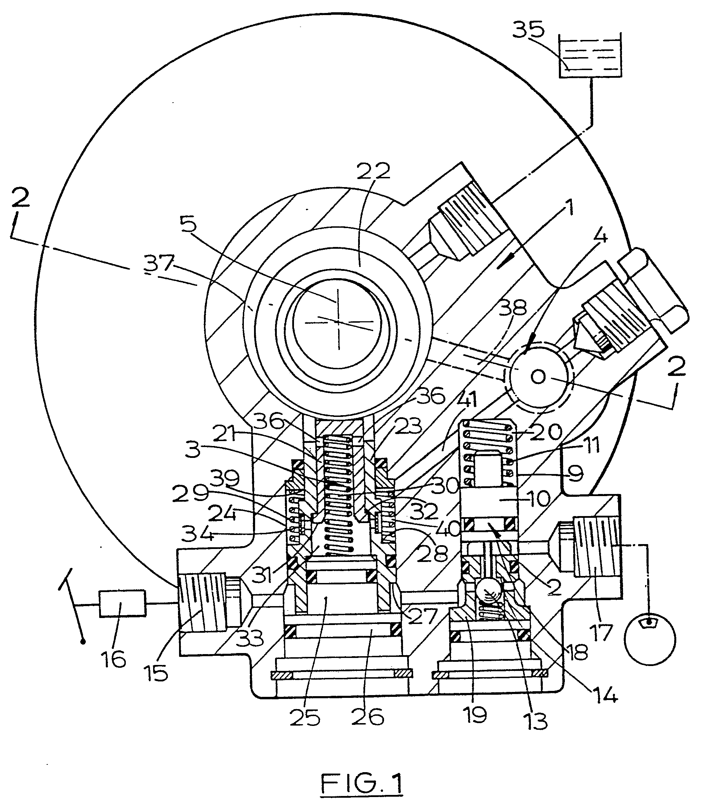

Figure 1 is a transverse section through a combined modulator and skid sensing assembly for an hydraulic anti-skid braking system suitable for a motor-cycle; and

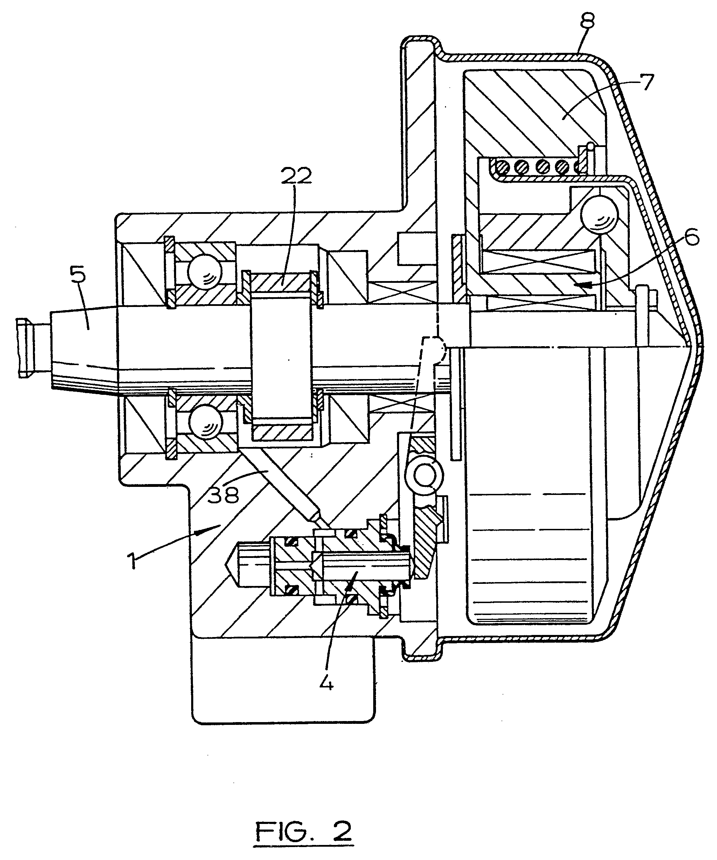

Figure 2 is a section on the line 2—2 of Figure 1.

The assembly illustrated in the drawings comprises a housing 1 incorporating a modulator assembly 2, an hydraulic pump 3 and a pressure dump valve 4. A longitudinally extending shaft 5 projecting at opposite ends from the housing 1 is coupled at one end to the wheel and at the other end carries skid sensing means 6 in the form of a flywheel assembly 7 which is enclosed within a cylindrical guard 8 carried from the adjacent end of the housing 1.

The modulator assembly 2 comprises a bore 9 in which works a piston 10 which is normally urged into an operative position by a spring 11. In this position the piston 10 urges a spring-loaded ball 13 away from a seating 14 to place an inlet port 15 for connection to an hydraulic master cylinder 16 in communication with an outlet port 17 for connection to a brake associated with the wheel which drives the shaft 5. The operative position is defined by the engagement of the piston 10 with a stop face 18 on a member 19 in which the seating 14 is incorporated. The dump valve 4 is in communication with that end of the bore 9 which is remote from the valve 13, 14.

The pump 3 comprises a plunger in the form of a hollow piston 21 of which the closed end is engageable with a drive mechanism comprising a ring 22 which is freely rotatable on an eccentric portion of the shaft 5. The piston 21 is reciprocable in the bore of a stepped sleeve 23 which, in turn, is slidable in a stepped bore 24 in the housing 1. The end of the sleeve 23 which is of greater area is slidably and sealingly guided on a spigot 25 of a plug 26 which forms a closure for the outer end of the bore 24. A stepped annular face 27 defined by a portion of the sleeve 23 which is disposed between the bore 24 and the spigot 25 is exposed to the pressure at the inlet port 15. A stepped shoulder 28 is also provided at the change in diameter of the sleeve 23, and the shoulder 28 is of smaller area than the face 27.

A compression spring 29 acts on the sleeve 23 to urge it towards the plug 26. A compression spring 30 acts on the plunger 21 to urge it towards the ring 22, but it is held clear of the ring 22 by the engagement of a radial flange 31 on the inner end of the plunger 21 with a shoulder 32 on the sleeve 23.

A secondary working chamber 40 is defined by the annular volume bounded by the bore 24, the sleeve 23, and seals between corresponding portions of the sleeve 23 and the bore 24. The stepped shoulder 28 is exposed to pressure in the secondary working chamber 40.

A primary working chamber 33 is defined between the plunger 21, the sleeve 23 and the plug 26. The working chamber 33 communicates with the secondary working primary chamber 40 through a one-way valve 34 of the band type which encircles the sleeve 23, and with a reservoir 35 for fluid through radial ports 36 in the plunger 21, when the plunger 21 is in its inoperative position and during an induction stroke. The reservoir 35 communicates with the ports 36 through a sealed chamber 37 in the housing 1 and in which the ring 22 is housed. The shaft 5 is therefore lubricated by the fluid.

An expansion chamber 20 is defined by that portion of the bore 9 between the piston 10 and the dump valve 4, the secondary working chamber 40, and a passage 41 between the dump valve 4, the secondary working chamber 40, and the said portion of the bore 9.

When the wheel is rotating in a "brakes-off" condition, the dump valve 4 is closed to cut-off communication between the working chamber 33 and the expansion chamber 20, and the reservoir 35 through a passage 38 in the housing 1. The sleeve 23 is held in an inoperative retracted position in engagement with the plug 26 by the spring 29, since the spring 29 is stronger than the spring 30. The plunger 21 is, in turn, held by the sleeve 23 out of engagement with the eccentric mounted ring 22.

The reservoir 35 is in open communication with the working chamber 33 through the chamber 37 and the radial ports 36, and the spring-loaded ball 13 is held away from its seating 14 by the spring 11, so that the brakes are in open communication with the reservoir for the master cylinder 16, which may be the same as, or different from, the reservoir 35.

During normal braking fluid from the master cylinder 16 is applied to the brakes through the ports 15 and 17 and the space between the ball 13 and the seating 14. This pressure also acts over the area of the stepped face 27 to tend to urge the sleeve 23 towards an advanced operative position in which the pump plunger 21 can engage with the ring 22. However, since the fluid in the expansion chamber 20 is trapped, a pressure is developed which acts over the area of the shoulder 28 to resist movement of the sleeve 23. The sleeve 23 is therefore unable to move towards the ring 22 so that it remains in its inoperative position and the pump 3 remains disabled. In addition since the area of the shoulder 28 is smaller than the area of the face 27, the same trapped fluid develops in the expansion chamber 20 a pressure which is higher than the pressure from the master cylinder 11, and this higher pressure acts on the piston 10 to hold it against the stop 18. This ensures that the ball 13 is held away from the seating 14 in opposition to pressure from the master cylinder.

If the angular deceleration of the braked wheel exceeds a predetermined value, the skid sensing member is operative to open the dump valve 4. This relieves the pressure trapped in the expansion chamber 20, by connecting it to the reservoir 35.

Reduction in pressure in the chamber 20 causes the piston 10 to be unbalanced so that it moves to permit the ball 13 to engage with the seating 14 which cuts off the supply from the master cylinder 16 to the brake. Further movement of the piston 10 in the same direction expands the brake volume to reduce the pressure applied to the brake. In addition the force on the sleeve 23 comprising the reaction of the trapped fluid acting over the area of the face 28 is reduced so that the pressure from the master cylinder 16 acting over the area 27 urges the sleeve 23 into its operative position in engagement with a stop 39 defined by an abutment for the spring 29 and in which position the plunger 21 can engage with the ring 22 so that fluid is pumped in a closed circuit from the reservoir 35, and to which it is returned. In particular, during an induction stroke in which the plunger 21 can move relatively away from the plug 26 towards the ring 22, fluid is drawn into the primary working chamber 33 through the ports 36 and, during the compression stroke in which the plunger 21 is moved in the opposite direction, the ports 36 are first covered as the plunger 21 moves back into the sleeve 23, whereafter the fluid is pumped into the secondary working chamber 40 through the one-way valve 34, from whence it is returned to the reservoir 35. This continues whilst the dump valve 4 remains open.

Upon closure of the dump valve 4 at the termination of the skid signal, communication between the expansion chamber 20 and the reservoir 35 is cut-off so that fluid from the pump 3 progressively increases the pressure in the expansion chamber 20 and urges the piston 10 towards its operative position to reduce the brake volume and thereby increase the pressure applied to the brake. The pressure developed in the expansion chamber 20 also acts over the area of the shoulder 28. This continues until the pressure applied to the brake attains that which caused the previous corrected skid to occur. The piston 10 then moves to engage with the stop 18, thereby opening the valve 13. Thereafter, the pump 3 further increases the pressure acting over the shoulder 28 to apply, together with the spring 29, a force to the sleeve 23 which overcomes the force of the pressure from the master cylinder 11 acting over the greater area of the face 27. The sleeve 23 is subjected to a net force which moves it relatively away from the ring 22 to withdraw the plunger 21 from its engagement with the ring 22, thereby disabling the pump 3.

Upon release of the brake fluid is drawn through the ports 36 and the one-way valve 34 and into the expansion chamber 20 as the sleeve 23 is urged fully into its inoperative position shown in the drawings, under the influence of the return spring 29.

## Claims

1. An hydraulic anti-skid braking system for vehicles in which a supply of operating fluid from a supply (16) to a vehicle brake is modulated by a modulator assembly (2) in accordance with skid signals from skid sensing means (6), and an hydraulic pump (3) incorporating a plunger (21) working in a bore has a working chamber (33) which is in communication with the modulator assembly (2) to control brake application following skid correction, characterised in that the pump plunger (21) works in a bore of a sleeve (23) which is axially movable in a position and an inoperative position, when the sleeve (23) is in the operative position the plunger (21) can co-operate with a drive mechanism (22) so that the plunger (21) is reciprocated in the bore to draw fluid from a reservoir (35) and into the working chamber (33) through an inlet port (36) during an induction stroke and during a compression stroke to force it through an outlet port to the modulator assembly (2), and when the sleeve (23) is in the inoperative position the plunger (21) is prevented from co-operating with the drive mechanism (22) so that the pump (3) is disabled.

2. A system as claimed in Claim 1, characterised in that the sleeve (23) is provided with opposed first and second faces (28, 27) of which the first face (28) is exposed to the pressure of fluid in an expansion chamber (20), at least when a dump valve (4) is closed, and the second face (27) is exposed to the pressure from the supply (16), so that the sleeve (23) is held in the inoperative position, when the dump valve (4) is closed, by the incompressibility of the fluid in the expansion chamber (20), reduction in the pressure applied to the first face (28) permitting the sleeve (23) to move into the operative position in which the plunger (21) can co-operate with the drive mechanism (22).

3. A system as claimed in Claim 1 or Claim 2, characterised in that, when the pump (3) is disabled, the plunger (21) is prevented from co-operating with the drive mechanism (22) by the engagement of a shoulder (32) on the sleeve (23) with a complementary shoulder (31) on the plunger (21).

4. A system as claimed in any of Claims 1 to 3, characterised in that a first spring (29) also acts to urge the sleeve (23) towards the inoperative position, and a second spring (30) acts to urge the plunger (21) towards the drive mechanism (22) with respect to the sleeve (23).

5. A system as claimed in any of Claims 2—4, characterised in that the first and second faces (28, 27) of the sleeve (23) are of smaller and greater areas respectively.

6. A system as claimed in any preceding claim, characterised in that the plunger (21) is hollow and incorporates at least one radial port (36) through which the reservoir (35) can communicate with the working chamber (33) when the sleeve is in the inoperative position and during the induction stroke, the port (36) being closed by the sleeve (23) during the compression stroke.

7. A system as claimed in any of Claims 2—6, characterised in that the modulator assembly (2) incorporates the expansion chamber (20) to which the working chamber (33) of the pump (3) is connected, and the dump valve (4) is disposed between the expansion chamber (20) and the reservoir (35) for fluid, the dump valve (4) being movable by the skid sensing means (6) between a normally closed position in which the expansion chamber (20) is pressurised so that the modulator assembly (2) is held in a first position permitting operating fluid to be supplied to the brake and an open position when the skid signal is received whereby the pressure in the expansion chamber (20) is reduced so that the modulator assembly (2) can move into a second position to cut-off communication between the supply (16) and the brake and subsequently reduce the pressure of fluid supplied to the brake.

**Patentansprüche**

1. Hydraulisch betätigtes Gleitschutzbremssystem für Fahrzeuge, bei dem ein von einer Quelle (16) erzeugter Betätigungsfluidstrom zu einer Fahrzeugbremse von einem Modulator (2) in Übereinstimmung mit Blockiersignalen aus einem Blokkierzustandssensor (6) modulierbar ist und eine hydraulische Pumpe (3) mit einem in einer Bohrung arbeitenden Tauchkolben (21) eine Arbeitskammer (33) hat, die zum Steuern der Bremsbetätigung nach Aufhebung eines Blockierzustandes mit dem Modulator (2) in Verbindung steht, dadurch gekennzeichnet, daß der Tauchkolben (21) der Pumpe (3) in einer Bohrung einer Hülse (23) arbeitet, die in einer Bohrung in einem Gehäuse (1) zwischen einer Arbeits- und einer Ruhestellung axial bewegbar ist, wobei der Tauchkolben (21) in der Arbeitsstellung der Hülse (23) mit einer Antriebsvorrichtung (22) so zusammenarbeiten kann, daß er in der Bohrung hin- und herbewegbar ist und Fluid bei einem Ansaughub aus einem Behälter (35) über eine Einlaßöffnung (36) in die Arbeitskammer (33) ansaugt und bei einem Kompressionshub über eine Auslaßöffnung zum Modulator (2) drückt, und in der Ruhestellung der Hülse (23) am Zusammenwirken mit der Antriebsvorrichtung (22) gehindert ist, derart, daß die Pumpe (3) außer Betrieb gesetzt ist.

2. . Bremssystem nach Anspruch 1, dadurch gekennzeichnet, daß die Hülse (23) entgegengesetzte erste und zweite Planflächen (28, 27) aufweist, von denen die erste Planfläche (28) zumindest in der Schießstellung eines Schnellablaßventils (4) dem Fluiddruck in einer Expansionskammer (20) und die zweite Planfläche (27) dem Druck aus der Quelle (16) ausgesetzt ist, derart, daß die Hülse (23) bei geschlossenem Schnellablaßventil (4) aufgrund der Inkompressibilität des Fluides in der Expansionskammer (20) in der Ruhestellung gehalten ist und eine Verringerung des der ersten Planfläche (28) zugeführten Druckes es der Hülse (23) ermöglicht, sich in die Arbeitsstellung zu bewegen, in welcher der Tauchkolben (21) mit der Antriebsvorrichtung (22) zusammenwirken kann.

3. Bremssystem nach Anspruch 1 oder 2, dadurch gekennzeichnet, daß der Tauchkolben (21) bei außer Betrieb gesetzter Pumpe (3) durch das Anliegen einer Schulter (32) der Hülse (23) an einer komplementären Schulter (31) des Tauchkolbens (21) am Zusammenwirken mit der Antriebsvorrichtung (22) gehindert ist.

4. Bremssystem nach einem der Ansprüche 1 bis 3, dadurch gekennzeichnet, daß eine erste Feder (29) auch eine Vorspannung der Hülse (23) in Richtung auf die Ruhestellung bewirkt, und eine zweite Feder (30) den Tauchkolben (21) in bezug auf die Hülse (23) zur Antriebsvorrichtung (22) hin vorspannt.

5. Bremssystem nach einem der Ansprüche 2 bis 4, dadurch gekennzeichnet, daß die erste Planfläche (28) von kleinerem und die zweite Planfläche (27) von größerem Flächeninhalt ist.

6. Bremssystem nach einer der Ansprüche 1 bis 5, dadurch gekennzeichnet, daß der Tauchkolben (21) hohl ist und wenigstens eine radiale Öffnung (36) aufweist, über die der Behälter (35) in der Ruhestellung der Hülse und beim Ansaughub mit der Arbeitskammer (33) verbindbar ist und die beim Kompressionshub durch die Hülse (23) geschlossen ist.

7. Bremssystem nach einem der Ansprüche 2 bis 6, dadurch gekennzeichnet, daß der Modulator (2) die Expansionskammer (20) enthält, mit der die Arbeitskammer (33) der Pumpe (3) verbunden ist, und das Schnellablaßventil (4) zwischen der Expansionskammer (20) und dem Fluidbehälter (35) angeordnet und durch den Blockierzustandssensor (6) in eine normale Schließstellung in der die Expansionskammer (20) unter Druck gesetzt ist, derart, daß der Modulator (2) in einer ersten Stellung gehalten ist, in welcher Betätigungsfluid der Bremse zuführbar ist, und bei Empfang des Blockiersignals in eine Offenstellung bewegbar ist, derart, daß der Druck in der Expansionskammer (20) so verringert ist, daß sich der Modulator (2) in eine zweite Stellung bewegen kann, um die Verbindung zwischen der Quelle (16) und der Bremse zu unterbrechen und danach den der Bremse zugeführten Fluiddruck zu verringern.

**Revendications**

1. Système hydraulique anti-patinage pour véhicules dans lequel une amenée de fluide d'actionnement d'une source (16) à un frein de véhicule est modulée par un ensemble modulateur (2) selon des signaux de patinage venant de moyens de détection de patinage (6) et une pompe hydraulique (3) comportant un plongeur (21) qui agit dans un alésage présente une chambre de travail (33) qui est en communication avec l'ensemble modulateur (2) pour commander le serrage du frein après la correction du patinage, caractérisé par le fait que le plongeur (21) de la pompe agit dans un alésage d'un manchon (23) qui peut se mouvoir axialement dans un alésage d'un corps (1) entre une position active et une position inactive, quand le manchon (23) est dans la position active le plongeur (21) peut coopérer avec une mécanisme d'entraînement (22) de sorte que le plongeur (21) est mis en va-et-vient dans l'alésage pour aspirer du fluide d'un réservoir (35) dans la chambre de travail (33), à travers un orifice d'entrée (36) pendant une course d'aspiration et pour le refouler, pendant une course de compression, à travers un orifice de sortie, vers l'ensemble modulateur (2) et quand le manchon (23) est dans la position inactive, le plongeur (21) est empêché de coopérer avec le mécanisme d'entraînement (22) de sorte que la pompe (3) est mise hors d'action.

2. Système selon la revendication 1, caractérisé par le fait que le manchon (23) est muni d'une première et d'une deuxième faces opposées (28, 27) dont la première face (28) est exposée à la pression de fluide régnant dans une chambre de détente (20), au moins quand une valve de décharge (4) est fermée, et la deuxième face (27) est exposée à la pression venant de la source de sorte que le manchon (23) est retenu dans la position inactive, quand la valve de décharge (4) est fermé, par l'incompressibilité du fluide contenu dans la chambre de détente (20), une réduction de la pression appliquée à la première face permetant au manchon (23) de passer à la position active dans laquelle le plongeur (21) peut coopérer avec le mécanisme d'entraînement (22).

3. Système selon l'une des revendications 1 et 2, caractérisé par le fait que quand la pompe (3) est mise hors d'action, le plongeur (21) est empêché de coopérer avec le mécanisme d'entraînement (22) par l'application d'un épaulement (32) du manchon (23) à un épaulement complémentaire (31) du plongeur (21).

4. Système selon l'une quelconque des revendications 1 à 3, caractérisé par le fait qu'un premier ressort (29) agit aussi de manière à solliciter le manchon (23) vers la position inactive et qu'un deuxième ressort (30) agit de manière à solliciter le plongeur (21) en direction du mécanisme d'entraînement (22), relativement au manchon (23).

5. Système selon l'une quelconque des revendications 2 à 4, caractérisé par le fait que les première et deuxième faces (28, 27) du manchon (23) ont respectivement une plus petite et une plus grande surfaces.

6. Système selon l'une quelconque des revendications précédentes, caractérisé par le fait que le plongeur (21) est creux et comporte au moins un orifice radial (36) à travers lequel le réservoir (35) peut communiquer avec la chambre de travail (33) quand le manchon est dans la position inactive et pendant la course d'aspiration, l'orifice (36) étant fermé par le manchon (23) pendant la course de compression.

7. Système selon l'une quelconque des revendications 2 à 6, caractérisé par le fait que l'ensemble modulateur (2) comporte la chambre de détente (20) à laquelle est reliée la chambre de travail (33) de la pompe (3) et que la valve de décharge (4) est disposée entre la chambre de détente (20) et le réservoir à fluide (35), la valve de décharge (4) pouvant être déplacée par les moyens de détection de patinage (6) entre une position normalement fermée où la chambre de détente (20) est mise sous pression de sorte que l'ensemble modulateur (2) est retenu dans une première position permettant à du fluide d'actionnement d'être amené au frein et une position ouverte lorsque le signal de patinage est reçu, de sorte que la pression de la chambre de détente (20) se réduit, ce que fait que l'ensemble modulateur (20) peut passer à une deuxième position pour couper la communication entre la source (16) et le frein et ensuite réduire la pression de fluide amené au frein.

FIG.1

FIG. 2